# EUROPEAN PATENT APPLICATION

(11) **EP 3 318 500 A1**
(43) Date of publication of application: **09.05.2018**
(21) Application number: 16197482.9
(22) Date of filing: 07.11.2016
(51) Int. Cl.: B65B 61/18

(54) **APPLYING APPARATUS AND METHOD FOR APPLYING OPENING DEVICES TO PACKAGES**

(71) Applicant: Tetra Laval Holdings & Finance S.A., 1009 Pully (CH)
(72) Inventor: BORASI, Gabriele, 41057 Spilamberto (IT); MALAVASI, Filippo, 41126 Modena (IT); ZANICHELLI, Davide, 42122 Reggio Emilia (IT)
(74) Representative: Tetra Pak - Patent Attorneys SE

(57) **Abstract**

An applying apparatus for applying opening devices (43) to packages (2) comprises an applying unit (42) for applying said opening devices (43) to a first portion (202) of said packages (2) and a conveying unit (1) for conveying said packages (2) towards said applying unit (42), said conveying unit (1) comprising a conveying device (3) that supports said packages (2) and advances said packages (2) along an advancing direction (D), a first conveying element (7) and a second conveying element (12) arranged on opposite sides of said conveying device (3), said second conveying element (12) comprising bulge elements (20) arranged to interact with a second portion (203) of said packages (2) different from said first portion (202) to deform said second portion (203) at least when said applying unit (42) applies said opening devices (43) to said packages (2).

## Description

The invention relates to an applying apparatus for applying opening devices to packages. In particular, the invention relates to an applying apparatus for applying opening devices to packages of pourable food products formed from a tube of packaging material.

The invention also relates to a method for applying opening devices to packages. In particular, the invention relates to a method for applying opening devices to packages of pourable food products formed from a tube of packaging material.

As is known, many food products, such as fruit juice, pasteurized or UHT (ultra-high-temperature treated) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing laminated strip packaging material.

The packaging material has a multilayer structure substantially comprising a base layer for stiffness and strength, which may comprise a layer of fibrous material, e.g. paper, or of mineral-filled polypropylene material; and a number of layers of heat-seal plastic material, e.g. polyethylene film, covering both sides of the base layer.

In the case of aseptic packages for long-storage products, such as UHT milk, the packaging material also comprises a layer of gas- and light-barrier material, e.g. aluminium foil or ethyl vinyl alcohol (EVOH), which is superimposed on a layer of heat-seal plastic material, and is in turn covered with another layer of heat-seal plastic material forming the inner face of the package eventually contacting the food product.

As is known, packages of this sort are produced on fully automatic packaging machines, on which a continuous tube is formed from the web-fed packaging material. The web of packaging material is sterilized on the packaging machine, e.g. by applying a chemical sterilizing agent, such as a hydrogen peroxide solution, which, once sterilization is completed, is removed from the surfaces of the packaging material, e.g. evaporated by heating; and the web of packaging material so sterilized is maintained in a closed, sterile environment, and is folded and sealed longitudinally to form a vertical tube.

The tube is filled continuously downwards with the sterilized or sterile-processed food product, and is sealed and then cut along equally spaced cross sections to form pillow packs, which are then fed to a folding unit to form the finished, e.g. substantially parallelepiped-shaped packages.

Each of the formed, filled and sealed packages may be provided with an opening device.

The opening device usually comprises a frame having a flange intended to be attached to the package and a neck defining a pouring opening through which the product contained in the package may be poured. The opening device further comprises a lid fitted to the neck, which is removed from the neck when the product has to be poured and is applied again to the neck to re-close the pouring opening.

The packaging material forming the package may comprise a so called prelaminated hole, which is a hole formed in the base layer only and covered by the other lamination layers, i.e. the layers of heat-seal plastic material and the layer of gas- and light-barrier material.

In this case the opening device is applied to the package at the prelaminated hole and is provided with a cutter which - when the package is opened for the first time - cuts the prelaminated hole to allow pouring of the product contained in the package. The cutter may be driven by the lid. In particular, opening devices are known in which the lid is initially screwed to the neck. When the lid is unscrewed for the first time a cam device, defined by the lid, the cutter and the neck, drives the cutter so that the cutter cuts the prelaminated hole.

The opening devices are applied to the packages by cap applicators that are arranged downstream of the above-mentioned packaging machines.

The cap applicators comprise a conveying unit that receives the packages from the packaging machines and conveys the packages towards the applying unit.

The conveying unit comprises a conveyor belt that supports the packages and conveys the packages along an advancing direction. The conveyor belt has the shape of a loop and is wound around pulleys, each pulley rotating around a substantially horizontal axis. The conveyor belt comprises an upper active branch, which receives and moves the packages, and a lower return branch.

The conveying unit also comprises a so called belt brake, i.e. a device which interacts with the packages and releases the packages one at a time, so that the packages are substantially equally spaced along the conveyor belt. In other words, the belt brake creates substantially constant gaps between the packages. The packages, in fact, should be arranged at a pre-defined distance from each other in order that the applying devices of the applying unit can properly apply the opening devices.

The conveying unit further comprises a first conveying element and a second conveying element arranged on opposite sides of the conveyor belt.

The first conveying element comprises a first belt shaped as a loop and wound around pulleys, each pulley having a substantially vertical axis.

The first conveying element comprises a plurality of fingers projecting from the belt.

The second conveying element comprises a belt shaped as a loop and wound around pulleys, each pulley having a substantially vertical axis.

The first belt and the second belt comprise guiding branches facing each other.

The first conveying element is longer than the second conveying element and is arranged closer to the belt brake than the second conveying element. The first conveying element, therefore, interacts with the packages before the second conveying element.

During operation, each finger of the first conveying element interacts with a wall of a corresponding package, the finger being positioned upstream of the package along the advancing direction. In particular, each finger pushes the corresponding package towards the applying unit.

During application of the opening devices, the packages are received between the first belt and the second belt. The opening devices are applied while the packages are moved in the advancing direction.

A drawback of the known cap applicators is that the opening devices can be improperly applied to the package.

In particular, the package may have a shape that somehow differs from the theoretical shape. This can be caused, for example, by defective filling of the package during forming or to stress of the packaging material during handling.

For this reasons, a panel of the package on which the opening device has to be applied may be non-planar, so causing - during application - a mispositioning of the opening device with respect to the package. The problem can be particularly relevant in case the opening device is provided with a flange that has to be applied onto two adjacent panels, i.e. the top panel of the package and the front panel of the package. In this case, in fact, if the opening device is not properly applied to both the top panel and the front panel, leakages of the product contained in the package may occur once the package has been opened for the first time and then reclosed.

An object of the invention is to improve the applying apparatus and the methods for applying opening devices to packages.

Another object of the invention is to provide an applying apparatus and a method that allow to properly apply opening devices also on packages having panels that have a shape that differs from a theoretical shape.

Another object of the invention is to provide an applying apparatus and a method that allow to properly apply opening devices on packages having panels that are not completely planar.

Another object of the invention is to provide an applying apparatus and a method that allow to properly apply opening devices that have an angled flange arranged to be fixed to two mutually adjacent panels of a package.

According to a first aspect of the invention, there is provided an applying apparatus for applying opening devices to packages, comprising an applying unit for applying said opening devices to a first portion of said packages and a conveying unit for conveying said packages towards said applying unit, said conveying unit comprising a conveying device that supports said packages and advances said packages along an advancing direction, a first conveying element and a second conveying element arranged on opposite sides of said conveying device, characterized in that said second conveying element comprises bulge elements arranged to interact with a second portion of said packages different from said first portion to deform said second portion at least when said applying unit applies said opening devices to said packages.

According to a second aspect of the invention there is provided a method for applying opening devices to packages, comprising the step of applying said opening devices to a first portion of said packages, the step of advancing said packages along an advancing direction by means of a conveying device, the step of providing a first conveying element and a second conveying element arranged on opposite sides of said conveying device, characterized in that said method further comprises the step of deforming, by means of bulge elements extending from said second conveying element, a second portion of said packages different from said first portion, at least during said step of applying said opening devices to a first portion of said package.

Owing to the invention, the interaction of the bulge elements with the second portion generates a deformation of the second portion that - due to the product contained in the package - pushes the first portion to, and/or maintains the first portion in, a theoretical configuration. In particular, due to the deformation of the second portion, the first portion is kept in a substantially planar configuration during application of the opening device. This reduces - or even eliminates - the risk of mispositioning of the opening device with respect to the package.

In particular, in case the first portion is slightly concave, due to imperfect forming of the package, the action of the bulge elements on the package causes a deformation of the second portion that, in turn, causes a controlled deformation of the first portion that recovers the concavity.

The action of the bulges may cause an increased pressure inside the package that eliminates possible concavity of the first portion and ensures proper application of the opening device.

Some preferred, non-limiting embodiments of the present invention will be described by way of example with reference to the accompanying drawings, in which:
Figure 1 is a schematic plan view, with some details removed for clarity, of an applying apparatus according to the invention;
Figure 2 is a perspective side view of the applying apparatus of Figure 1;
Figure 3, is a perspective view of a package on which an opening device has been applied;
Figure 4 is a cross-section of a sheet of packaging material that is used to manufacture the package of Figure 3;
Figure 5 is a perspective side view of a conveying element of the applying apparatus of Figure 1 and 2;
Figure 6 is a perspective side view of a variant of the conveying element.

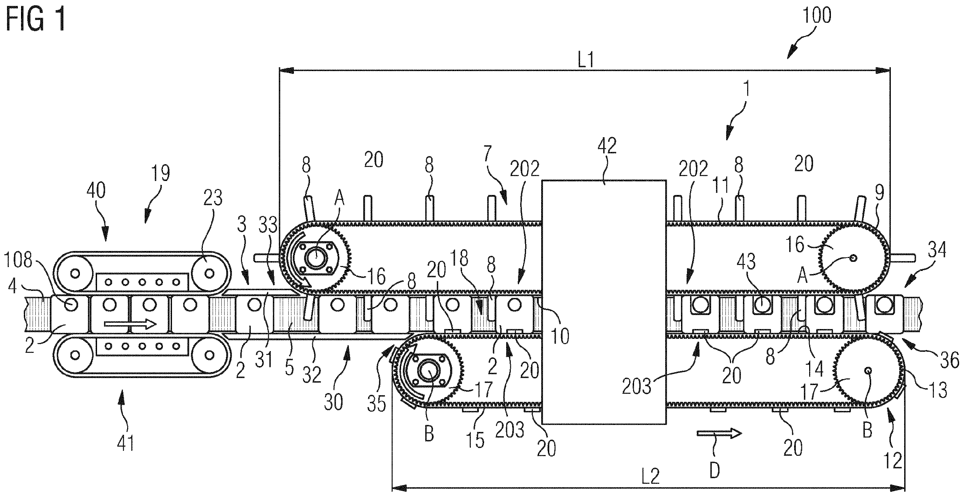

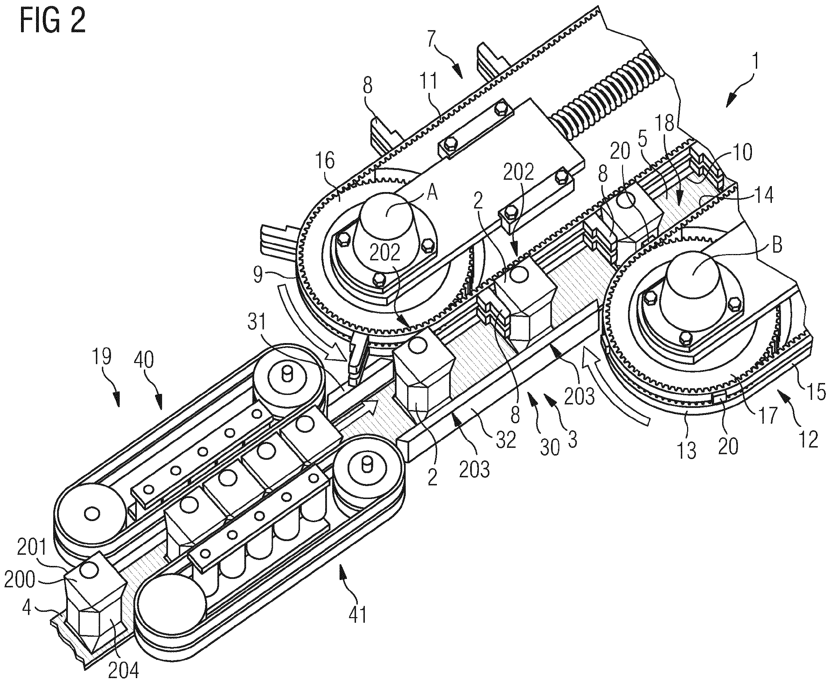

With reference to Figures 1 and 2 there is shown an applying apparatus 100 comprising an applying unit 42 for applying opening devices 43 to packages 2 and a conveying unit 1 for conveying the packages 2 towards the applying unit 42.

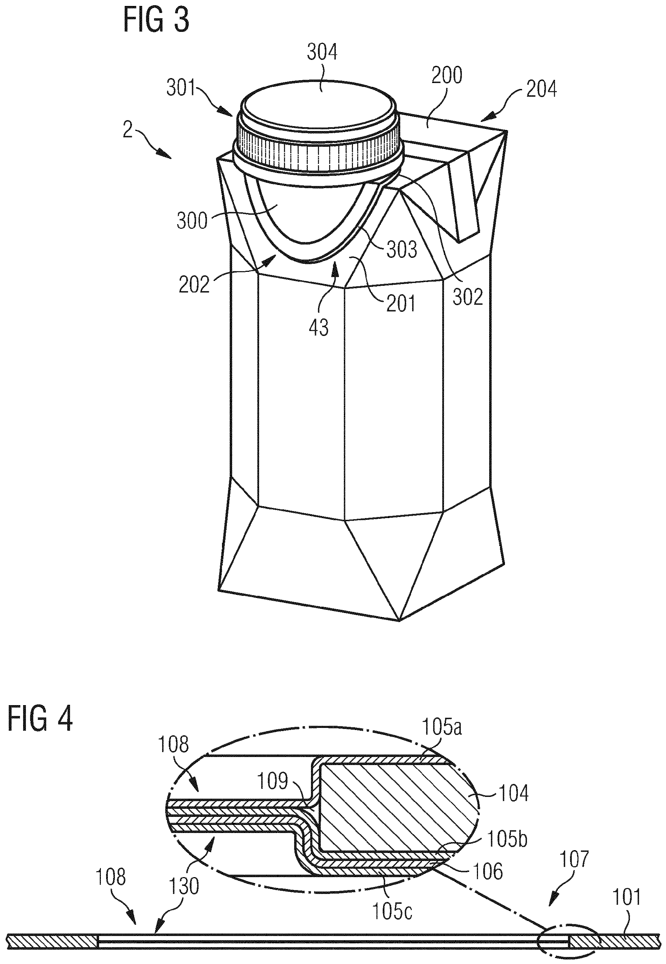

Figure 4 shows a sheet of packaging material 101 used for manufacturing the packages 2. The sheet of packaging material 101 can be deformed, i.e. bent, so as to produce the package 2.

The packaging material 101 comprises a base layer 104 for stiffness and strength, which may be made of fibrous material, e.g. paper, or mineral-filled polypropylene material, and a first covering layer 105a and a second covering layer 105b, made of heat-sealable plastic material, e.g. polyethylene films, and covering both sides of base layer 104.

In the case of an aseptic container for long-storage products, such as UHT milk, the sheet of packaging material 101 also comprises a barrier layer 106 made of gas-barrier material, e.g. aluminium foil or ethyl vinyl alcohol (EVOH) film, which is superimposed on the second covering layer 105b and is in turn covered with a third covering layer 105c, made of heat-sealable plastic material, e.g. a polyethylene film, forming the inner face of the package 2 eventually contacting the food product.

In other words, the first covering layer 105a, the second covering layer 105b, the barrier layer 106 and the third covering layer 105c define lamination layers applied to the base layer 104 when producing the sheet of packaging material 101.

The sheet of packaging material 101 also comprises a receiving region 107 intended to receive the opening device 43, once the package 2 has been formed.

The receiving region 107 comprises a breakable portion 108, for example a so-called prelaminated hole, i.e. a hole (or opening) 109 formed through the base layer 104 of the sheet of packaging material 101 and covered by the above-mentioned lamination layers, so that the hole 109 is sealed by a respective sheet cover portion 130.

In an alternative embodiment not shown, the breakable portion may be defined by only one or some of the above-mentioned lamination layers. For example, the breakable portion may be made solely of gas-barrier material.

In another alternative embodiment not shown, the breakable portion may be defined by a patch fixed to the rest of the sheet of packaging material to seal a hole formed, in this case, through the full thickness of the sheet of packaging material.

As shown in Figure 3, the package 2 is defined by a plurality of panels, in particular a top panel 200 and a front panel 201.

The top panel 200 and the front panel 201 are adjacent to each other and are angled to each other. In other words, the top panel 200 and the front panel 201 form an angle having a pre-set amplitude.

The opening device 43 comprises a frame 300 intended to be attached to the package 2, in particular at the breakable portion 108, and a pouring spout 301 projecting from the frame 300.

The opening device 43 further comprises a cutter (not shown) arranged to pierce the sheet cover portion 130, i.e. the breakable portion 108, when the package 2 is opened for the first time.

In addition, the opening device 43 comprises a lid 304 that closes the pouring spout 301 and is provided with a driving member (not shown) that drives the cutter, in a known manner, so that the cutter pierces the sheet cover portion 130.

The frame 300 has a first wall 302 and a second wall 303 that are adjacent to each other and are angled to each other. In other words, the first wall 302 and the second wall 303 form a further angle having a further pre-set amplitude that corresponds to the pre-set amplitude of the angle formed by the top panel 200 and the front panel 201.

The applying unit 42 applies the opening device 43 to a first portion 202 of the package.

In the embodiment shown, the first portion 202 comprises a part of the top panel 200 and a part of the front panel 201.

In this case, during operation, the applying unit 42 applies the opening device 43 to the package 2, so that the first wall 302 is attached to the top panel 200 and the second wall 303 is attached to the front panel 201. In another embodiment, not shown, the flange may be defined by only one flat wall and the first portion 202 may comprise only a part of the top panel 200.

In that case, during operation, the applying unit 42 applies the opening device 43 to the package 2, so that the flat wall is attached to the top panel 200.

The applying unit may have a plurality of applying devices (not shown) that apply the opening devices 43 to the packages 2. In particular, the opening devices 43 may be attached to the packages 2 by gluing.

The packages 2 are advanced through the applying unit 42 in a line. Each opening device 43 is carried by a respective applying device to a glue delivery station where a certain amount of glue is placed on the flange of the opening device 43. Subsequently, the applying device applies the opening device 43 to the corresponding package 2 at the first portion 202.

The applying unit 42 further comprises a plurality of pressing devices (not shown). Each pressing device pushes the respective opening device 43 onto the package 2 until the glue sets and the opening device 43 is permanently attached to the package 2.

The conveying unit 1 comprises a conveying device 3 that supports the packages 2 and advances the packages 2 along an advancing direction D.

The conveying device 3 comprises a flexible conveying arrangement, for example a conveyor belt 4 having the shape of a loop and wound around pulleys (not shown) having substantially horizontal axis. The conveyor belt 4 comprises an upper active branch 5 supporting and advancing the packages 2 and a lower return branch (not shown), opposite to the upper active branch 5.

The conveying unit 1 further comprises a first conveying element 7 positioned on one side of the conveying device 3 and provided with projecting elements 8 protruding from the first conveying device 7 and arranged for pushing the packages 2 in the advancing direction D.

The first conveying element 7 comprises a first flexible conveying arrangement, for example a first conveyor belt 9 having the shape of a loop and wound around first pulleys 16 having substantially vertical axis A. The first conveyor belt 9 comprises a first active branch 10 facing towards the conveying device 3 and a first return branch 11 opposite to the first active branch 10.

The projecting elements 8 extend from the first conveyor belt 9.

The conveying unit 1 further comprises a second conveying element 12 positioned on another side of the conveying device 3, opposite to the above-mentioned side.

The second conveying element 12 comprises a second flexible conveying arrangement, for example a second conveyor belt 13 having the shape of a loop and wound around second pulleys 17 having substantially vertical axis B. The second conveyor belt 13 comprises a second active branch 14 facing towards the conveying device 3 and a second return branch 15 opposite to the second active branch 14.

The first conveying element 7 and the second conveying element 12 are arranged on opposite sides of the conveying devices 3, the first active branch 10 and the second active branch 14 facing each other and defining, together with the conveying device 3, a channel 18 for the packages 2.

The first conveying element 7 has a first length L1 measured along direction D.

The second conveying element 12 has a second length L2 measured along direction D.

The first length L1 is greater than the second length L2.

The conveying unit 1 further comprises a sequencing device 19 that arranges the packages 2 on the conveyor belt 4 at a preset distance from each other.

The sequencing device 19 - a so-called belt brake - comprises a first belt unit 40 and a second belt unit 41 arranged on opposite sides of the conveyor belt 4.

The sequencing device 19 creates a queue of packages 2, i.e. a group of packages having no gaps therebetween, and releases the packages 2 one at a time. In this way, the packages 2 are substantially equally spaced one the conveyor belt 4.

The first conveying element 7 has a first inlet zone 33, at which it starts interacting with the packages 2, and a first outlet zone 34, at which it stops interacting with the packages 2, i.e. it releases the packages 2.

The second conveying element 12 is has a second inlet zone 35, at which it starts interacting with the packages 2, and a second outlet zone 36, at which it stops interacting with the packages 2, i.e. it releases the packages 2.

The first conveying element 7 and the second conveying element 12 face one another and are arranged in such a way that the first inlet zone 33 is closer to the sequencing device 19 than the second inlet zone 35, along direction D. The first outlet zone 34 is substantially at the same distance from the sequencing device 19 as the second outlet zone 36, along direction D. In other words, the first outlet zone 34 and the second outlet zone 36 are arranged one in front of the other.

The conveying unit 1 comprises a guide arrangement 30 arranged to guide the packages 2 before the packages 2 interact with the first conveying element 7.

The guide arrangement 30 is also arranged to guide the packages 2 during first interaction of the packages 2 with the projecting elements 8.

The guide arrangement 30 is further arranged to guide the packages 2 before the packages 2 interact with the second conveying element 12.

The guide arrangement 30 comprises a first guide element 31 arranged on the same side of the conveying device 3 as said first conveying element 7 and a second guide element 32 arranged on the same side of the conveying device 3 as said second conveying element 12.

In other words, the first guide element 31 and the second guide element 32 are arranged on opposite sides of the conveying device 3.

The guide arrangement 30 extends between the sequencing device 19, on one side, and the first conveying element 7 and the second conveying element 12, on the other side.

The first guide element 31 is shorter than the second guide element 32, since the first inlet zone 33 is closer to the sequencing device 19 than the second inlet zone 35.

The guide arrangement 30 is arranged partly below the first conveying element 7. In this way, the projecting elements 8 do not interfere with the first guide element 31.

The second conveying element 12 comprises bulge elements 20 arranged to interact with a second portion 203 of the packages 2 different from the first portion 202 at which the opening devices 43 are applied to the packages 2.

The bulge elements 20 are configured to deform the second portion 203 at least when the applying unit 1 applies the opening devices 43 to the packages 2.

In the embodiment shown, the second portion 203 comprises a part of a back panel 204 of the package 2.

The bulge elements 20 are connected to the second flexible conveying arrangement.

In the embodiment show, the bulge elements 20 are connected to the second conveyor belt 13.

The bulge elements 20 project from the second conveyor belt 13 towards the first conveyor belt 9.

The bulge elements 20 are arranged on the second conveyor belt 13 with a substantially constant pitch corresponding to the pitch of the packages 2 moving on the conveying device 3.

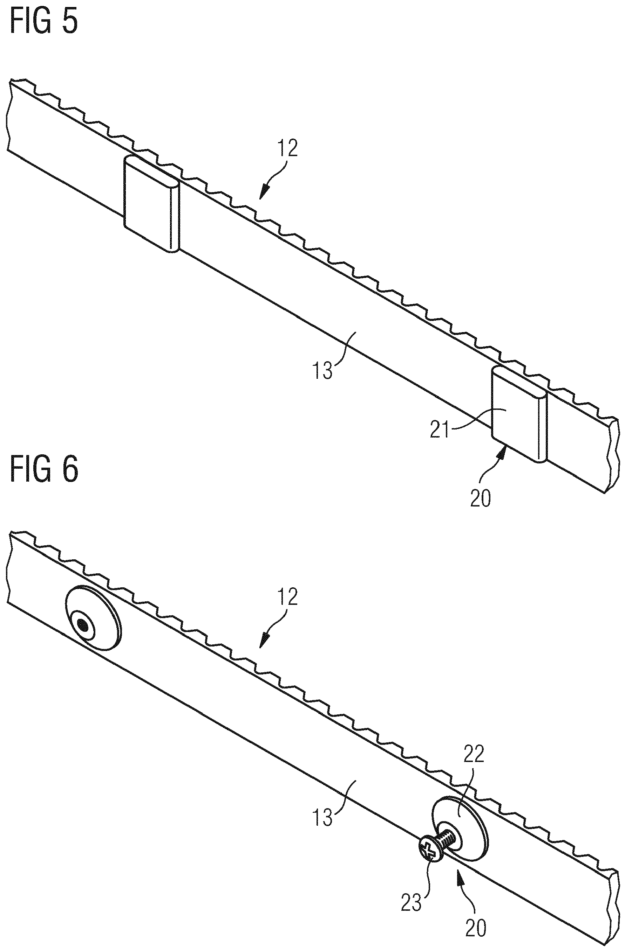

With reference to Figure 5, each bulge element 20 comprises a quadrilateral body 21.

With reference to Figure 6, each bulge element 20 comprises a rounded body 22.

In one version, the bulge elements 20 may be distinct from the second conveyor belt 13 and fixed to the second conveyor belt 13. In one case the bulge elements 20 may be permanently fixed to the second conveyor belt 13, for example by gluing. In another case, the bulge elements 20 may be connected to the second conveyor belt by means of fastening elements, for example screws 23 (Figure 6).

In another version, the bulge elements 20 are made as a single piece with the second conveyor belt 13.

It is clear that, the bulge elements 20 may have various shapes and may be fixed to the second conveyor belt 13 in different ways.

During operation, the sequencing unit 19 releases a line of packages 2 that are separated from each other by a defined distance.

The packages 2 are advanced by the conveyor belt 4.

The packages 2 reach the first inlet zone 33 where a projecting element 8 pushes a corresponding package 2.

Subsequently, the package 2 reaches the second inlet zone 35 where the package 2 interacts with the second conveyor belt 13. In particular, the package is kept between the first active branch 10 and the second active branch 14. In addition, the package 2 is pushed by the projecting element 8.

The guide arrangement 30, i.e. the first guide element 31 and the second guide element 32, guide the package 2 whilst the package 2 is transferred by the conveyor belt 4 from the sequencing device 19 to the first conveying element 7 and the second conveying element 12.

The applying devices of the applying unit 42 apply the opening devices 43 to the packages 2, whilst the packages are being conveyed in the advancing direction D.

In particular, the applying unit 42 applies an opening device 43 to the first portion 202 of a corresponding package 2.

At the same time, a bulge element 20 interacts with the second portion 203 of the package 2 to deform the second portion 203.

The deformation of the second portion 203, owing to the fact that the package 2 is made from the sheet of packaging material 101 and is filled with the product, is transferred to the first portion 202 so that the first portion is arranged in a theoretical configuration, which depends on the geometrical shape of the package 2. In particular, due to the deformation of the second portion 203, the first portion is kept in a substantially planar configuration during application of the opening device 43.

In this way, the risk that the opening device 43 is mispositioned with respect to the package 2 is significantly reduced, or even avoided.

In particular, in case the first portion 202 is slightly concave, the deformation of the second portion 203, caused by the bulge elements 20, generates, in turn, a controlled deformation of the first portion 202 that recovers the concavity.

In addition, the bulges 20 - when acting on the second portion 203 - may cause an increased pressure inside the package 2 that reduces, or removes possible concavity of the first portion 202 and ensures correct application of the opening device 43.

Clearly, changes may be made to the applying apparatus and to the method for applying opening devices to packages without, however, departing from the protective scope defined in the accompanying claims.

## Claims

1. Applying apparatus for applying opening devices (43) to packages (2), comprising an applying unit (42) for applying said opening devices (43) to a first portion (202) of said packages (2) and a conveying unit (1) for conveying said packages (2) towards said applying unit (42), said conveying unit (1) comprising a conveying device (3) that supports said packages (2) and advances said packages (2) along an advancing direction (D), a first conveying element (7) and a second conveying element (12) arranged on opposite sides of said conveying device (3), **characterized in that** said second conveying element (12) comprises bulge elements (20) arranged to interact with a second portion (203) of said packages (2) different from said first portion (202) to deform said second portion (203) at least when said applying unit (42) applies said opening devices (43) to said packages (2).

2. Applying apparatus according to claim 1, wherein said first conveying element (7) comprises a first flexible conveying arrangement (9) and said second conveying element (12) comprises a second flexible conveying arrangement (13), said bulge elements (20) projecting from said second flexible conveying arrangement (13) towards said first flexible conveying arrangement (9).

3. Applying apparatus according to claim 2, wherein said bulge elements (20) are arranged on said second flexible conveying arrangement (13) with a constant pitch.

4. Applying apparatus according to claim 2, or, 3, wherein said bulge elements (20) are distinct from said second flexible conveying arrangement (13) and are fixed to said second flexible conveying arrangement (13).

5. Applying apparatus according to claim 2, or 3, wherein said bulge elements (20) are made as a single piece with said second flexible conveying arrangement (13).

6. Applying apparatus according to any one of claims 2 to 5, wherein said first flexible conveying arrangement (9) comprises a first active branch (10) facing towards said conveying device (3) and said second flexible conveying arrangement (13) comprises a second active branch (14) facing towards said conveying device (3), said first active branch (10) and said second active branch (14) facing each other and defining, together with said conveying device (3), a channel (18) for said packages (2).

7. Method for applying opening devices (43) to packages (2), comprising the step of applying said opening devices (43) to a first portion (202) of said packages (2), the step of advancing said packages (2) along an advancing direction (D) by means of a conveying device (3), the step of providing a first conveying element (7) and a second conveying element (12) arranged on opposite sides of said conveying device (3), **characterized in that** said method further comprises the step of deforming, by means of bulge elements (20) extending from said second conveying element (12), a second portion (203) of said packages (2) different from said first portion (202), at least during said step of applying said opening devices (43) to a first portion (202) of said packages (2).

8. Method according to claim 7, wherein said package (2) comprises a top panel (200) and a front panel 201, said top panel (200) and said front panel (201) being adjacent to each other and being angled to each other so as to form an angle having a preset amplitude, said first portion (202) comprising a part of said top panel (200) and a part of said front panel (201).

9. Method according to claim 8, wherein said opening device (43) comprises a frame (300) having a first wall (302) and a second wall (303), said first wall (302) and said second wall (303) being are adjacent to each other and being angled to each other so as to form a further angle having a further pre-set amplitude that corresponds to said pre-set amplitude of said angle formed by said top panel (200) and said front panel (201), said step of applying said opening devices (43) to a first portion (202) of said packages (2) comprising the step of attaching said first wall (302) to said top panel (200) and said second wall (303) to said front panel (201).

10. Method according to any one of claims 7 to 9, wherein said package (2) comprises a back panel (204), said second portion (203) comprising a part of said back panel (204).
